# EUROPÄISCHE PATENTSCHRIFT

(11) **EP 2 036 841 B1**
(45) Veröffentlichungstag und Bekanntmachung des Hinweises auf die Patenterteilung: **06.01.2010**
(21) Anmeldenummer: 08015824.9
(22) Anmeldetag: 09.09.2008
(51) Int. Cl.: B65G 47/90

(54) **Vorrichtung zur Aufnahme und zum Transport eines Gutes**
Device for storing and transporting an item
Dispositif de réception et de transport d'une marchandise

(30) Priorität: 13.09.2007 DE 102007045042; 27.11.2007 DE 102007058264; 09.05.2008 DE 102008023762
(43) Veröffentlichungstag der Anmeldung: 18.03.2009
(73) Patentinhaber: Multivac Sepp Haggenmüller GmbH & Co. KG, 87787 Wolfertschwenden (DE)
(72) Erfinder: Mayer, Steffen, 71277 Rutesheim (DE); Binder, Jan, 73732 Esslingen (DE)
(74) Vertreter: Maatz-Jansen, Gero

(56) Entgegenhaltungen:
- WO-A-2007/093774
- DE-A1- 3 024 192

## Beschreibung

Die Erfindung betrifft eine Vorrichtung zur Aufnahme und zum Transport eines Gutes, die Aufnahmemittel aufweist, die durch eine Schiebeeinrichtung unter das Gut geschoben werden, wobei die Aufnahmemittel durch ein über Umlenkmittel geführtes Band gebildet werden. Die Vorrichtung kann dann von einem Roboter aufgenommen und an eine andere Stelle verbracht werden, wo das Gut wieder abgelegt wird.

Eine solche Vorrichtung ist aus der WO 2007/093774 A1 bekannt.

Dabei ist es ein Problem, dass bei jedem Bewegungstakt eine Feder über die gesamte Bewegungsstrecke des Bandes gespannt werden muss und dass ferner das Band bei seiner Bewegung über die Platte einer Abnutzung infolge der Reibung an der Platte unterliegt.

Weitere derartige Vorrichtungen sind zum Beispiel aus der WO 99/0036, der JP 57-151533 und der WO 2005/051812 bekannt.

Der Transport derartiger Güter bereitet dann besondere Probleme, wenn diese so flexibel (zum Beispiel eine Scheibe Wurst, Käse oder Fleisch) sind, dass sie beim Aufnehmen durch die Aufnahmemittel zusammengeschoben werden. Dann sind besondere Maßnahmen zu treffen, um dieses zu vermeiden.

Ein weiteres Problem der Anordnung stellt die exakte Positionierung der Anordnung mittels eines Roboters über die Abholebene dar. Auf Grund der Dynamik des Roboters und der damit verbundenen Regelungsgenauigkeiten sowie der Elastizität der Kinematik ergeben sich zwangsläufig Positionierungsgenauigkeiten über die Abholposition. Aus diesem Grund besteht die Notwendigkeit, den Roboter mit einem Mindestabstand über der Abholebene zu positionieren, so dass keine Kollision zwischen der Anordnung und der Abholebene stattfindet. Dieser Mindestabstand erschwert aber das Abgreifen von Produkten. Im Extremfall können Produkte mit einer Stärke, die kleiner ist als der Mindestabstand, nicht gegriffen werden.

Aus der GB 2 378 432 A ist eine Anordnung bekannt geworden, bei der Greiffinger von beiden Seiten an einen Kuchen, angelegt werden, um ihn mit einem gewissen Druck zu halten und emporzuheben. Um den Kuchen hochheben zu können, sind die Greiffinger so ausgebildet, dass sie eine Platte aufweisen, über die ein Band gezogen wird. Das Band ist in Kontakt mit dem Gegenstand. Wird es über die Platte gezogen, nimmt es den Gegenstand mit.

Eine weitere Anordnung der im Oberbegriff genannten Art ist in der eigenen älteren deutschen Offenlegungsschrift DE 10 2008 023 762 A1 der Anmelderin beschrieben.

Aufgabe der vorliegenden Erfindung ist es, unter Vermeidung dieser Nachteile eine Vorrichtung der eingangs genannten Art zu schaffen, bei der die Aufnahme des Gutes einfacher und zuverlässiger erfolgt.

Gemäß der Erfindung wird diese Aufgabe dadurch gelöst, dass die Umlenkmittel durch gegeneinander gespannte Spannstreben gebildet werden, die an der Schiebeeinrichtung angebracht sind und mit dieser verschoben werden.

Auf diese Weise wird eine reibungsarme Lagerung des Bandes bewirkt, die eine erheblich längere Lebensdauer gewährleistet.

Außerdem wird das Band zuverlässig und ohne die Anordnung einer Feder bewegt. Die Anordnung der Spannstreben an der Schiebeeinrichtung durch eine elastische Aufhängung, die vorzugsweise durch eine Blattfeder gebildet wird, ermöglicht es insbesondere bei Schrägstellung der Schiebeeinrichtung gegenüber der Fläche, auf der das Gut aufliegt, Positionierungsungenauigkeiten des Roboters auszugleichen.

Derartige Anordnungen sind nicht nur, wie oben bereits erwähnt, in der Nahrungsmittelindustrie einsetzbar, sondern auch beim Transport elektronischer Komponenten, die zwar starr sind, bei denen jede Art Relativbewegung zwischen Greifern und der Oberfläche vermieden werden muss, um die Oberflächen nicht zu verkratzen. Das sind zum Beispiel Halbleiter-Wafer.

Ausführungsbeispiele der Erfindung und ihrer vorteilhaften Weiterbildungen werden im Folgenden anhand der beigefügten Zeichnungen beschrieben.

Es stellen dar:
- Figur 1: ein erstes Ausführungsbeispiel,
- Figur 1a: einen Schnitt in Richtung der Pfeile Ia-Ia in Figur
- Figur 2: das Ausführungsbeispiel nach Figur 1 in einer Stellung, in der ein Gut 1 aufgenommen ist,
- Figur 3: das Ausführungsbeispiel nach einer Aufeinanderzubewegung der Schiebeeinheiten und einem Untergreifen eines Gutes 1 durch das Band 10,
- Figur 4: die schematische Darstellung einiger Bauteile bei einem zweiten Ausführungsbeispiel,
- Figur 5: ein drittes Ausführungsbeispiel.

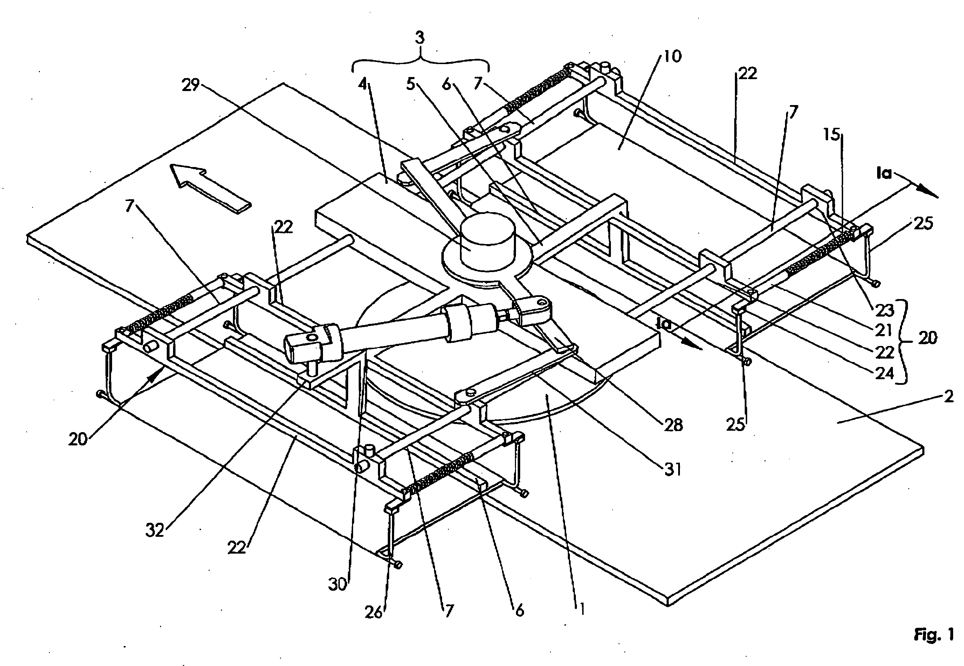

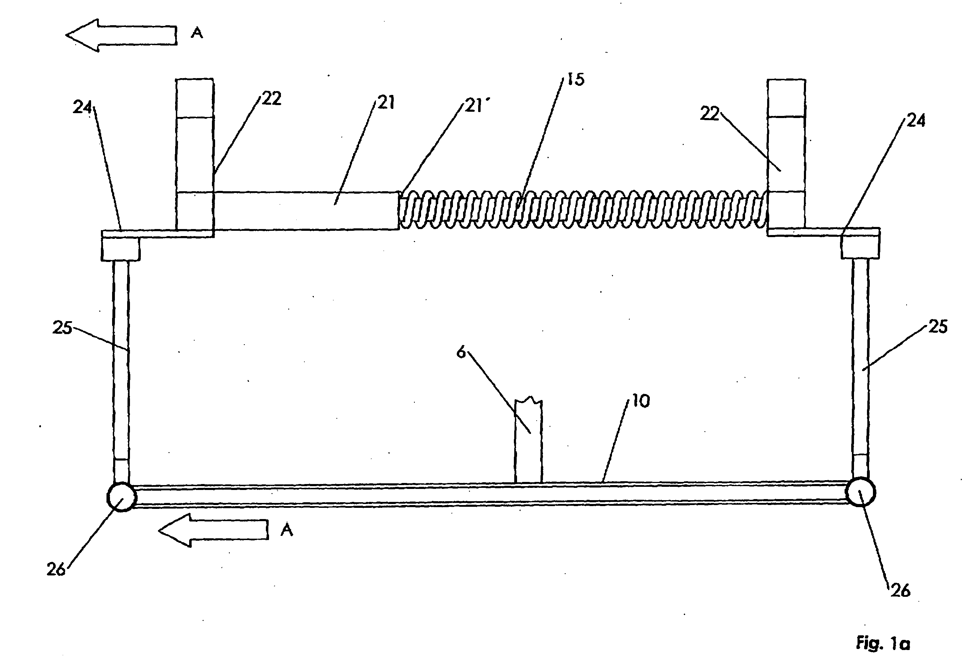

Wie aus Figur 1 bis 3 ersichtlich, liegt das aufzunehmende Gut 1 zum Beispiel auf einem Förderband 2. Dieses bildet beim Ausführungsbeispiel im Sinne der Patentansprüche die Fläche, auf der das Gut 1 aufliegt. Die Vorrichtung dient dazu, das Gut 1 aufzunehmen, so dass die Vorrichtung mit dem aufgenommenen Gut 1 durch einen Roboter, der an dem als Nabe ausgebildeten Lager 29 angreift, an eine andere Stelle transportiert und dort abgelegt werden kann.

Die Vorrichtung weist eine kastenartige Rahmenstruktur 3 auf, die durch eine Platte 4, einen U-förmigen Bügel 5, Querstreben 6 und an der Platte 4 angebrachte Führungsstangen 7 gebildet wird.

Die Vorrichtung weist ferner eine Schiebeeinrichtung 20 auf, die durch Querholme 22, zwischen ihnen angeordnete Spannstangen 21, an den Querholmen 22 angebrachten Blattfeder 24, an diesen befestigte Spannbügel 25 sowie die Spannbügel 25 verbindende Spannstreben 26 gebildet wird. Die Querholme 22 sind mit Führungsöffnungen 23 versehen, durch die sich die Führungsstangen 7 hindurch erstrecken, so dass die Schiebeeinheiten 20 auf den stationären Führungsstangen 7 verschiebbar sind.

Die Querholme 22 werden durch die Spannstange 21 auseinander gedrückt. Dies erfolgt, wie aus Figur 1a zu ersehen, dadurch dass der eine Querholm (links in Figur 1a) fest mit der Spannstange 21 verbunden und ferner eine Feder 15 vorgesehen ist, die zwischen einem Anschlag 21' der Spannstange 21 und dem anderen Querholm 22 wirkt. Damit wird auch das durch die Spannstreben 26 umgelenkte und über diese umlaufende Band 10, das geschlossenen Querschnitt aufweist, gespannt (vergleiche Figur 1a).

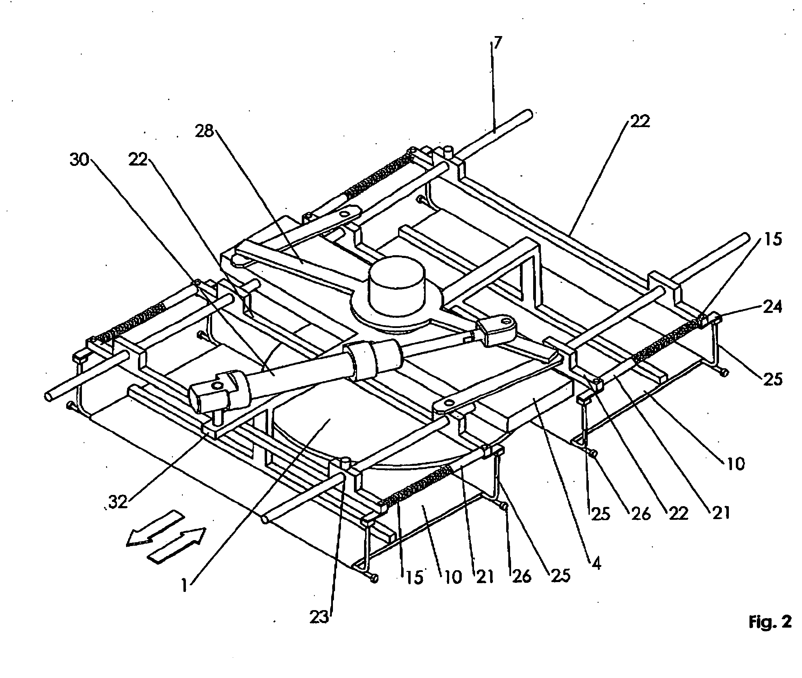

Mit dem Lager 29 ist ein Schwenkhebel 28 an der Platte 4 schwenkbar gelagert. An dem Schwenkhebel 28 greift die Kolbenstange einer Kolben-/Zylinderanordnung 30 an, die an einem Ausleger 32 des U-förmigen Bügels 5 abgestützt ist. Über den Kniehebel 31, der an einem Querholm 22 jeder Schiebeeinheit 20 angelenkt ist, werden somit bei Betätigung der Kolben-/Zylinderanordnung 30 die Schiebeeinrichtungen 20 zunächst aufeinander zu verschoben. Gleichermaßen können die Schiebeeinrichtungen 20 zum Ablegen des Gutes 1 von einander weg bewegt werden (siehe die Pfeile in Figur 2).

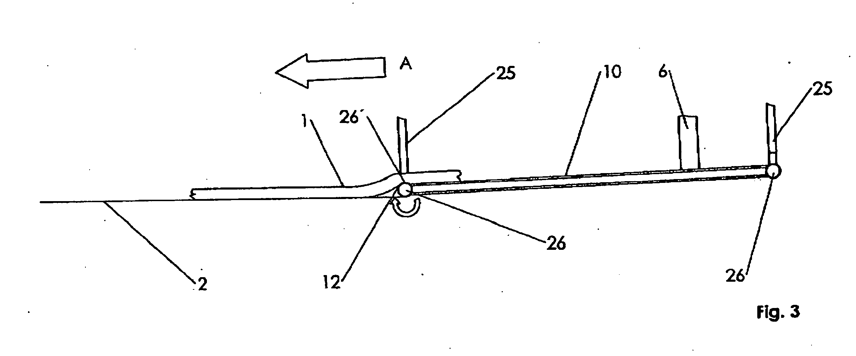

Werden die Schiebeeinrichtungen 20 in Richtung A (Fig. 1a und 3)aufeinander zu bewegt, so bewegen sich auch die beiden zu einer Schiebeeinrichtung gehörenden Spannbügel 25 und mit ihnen die Spannstreben 26 in dieselbe Richtung. Das Band 10 ist jedoch an der Querstrebe 6, die Teil der fest stehenden kastenartigen Rahmenstruktur 3 ist, befestigt. Das führt zu einer Bewegung des unteren Teils des Bandes 10 ebenfalls in Richtung A, da das Band 10 mit der Querstrebe 6 fest verbunden ist. Das Band 10 wird also, während es um die Spannstreben 26 umläuft, verschoben und schiebt sich, wie aus Figur 3 zu ersehen, von unten her abrollend unter das Gut 1 und hebt dieses an, jedoch entlang des Berührungsbereiches 12 zwischen Gut 1 und Band 10 ohne eine horizontale Relativbewegung zwischen Gut 1 und Band 10. Es entsteht also keine Reibungskraft in horizontaler Richtung, die auf das Gut 1 einwirken könnte. Zur Erleichterung des Ablaufs und Verminderung der Reibung des Bandes 10 an der Spannstrebe 26 ist diese noch von einer drehbaren Hülse 26' umgeben.

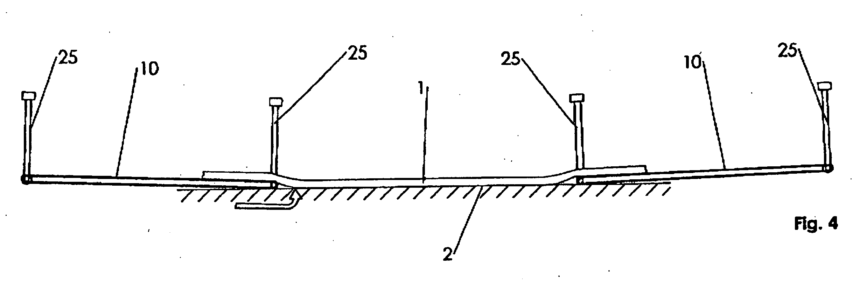

Figur 4 zeigt schematisch eine Anordnung, bei der die beiden Schiebeeinrichtungen 20 zu beiden Seiten des Gutes 1 gegenüber der Fläche des Transportbandes 2 beziehungsweise irgendeiner anderen Fläche, auf der das Gut aufliegt; leicht schräg geneigt sind. Infrage kommt ein Winkel von 0,5 - 10°. Dadurch wird die Reibung zwischen dem sich bewegenden Band 10 und der Auflagefläche beziehungsweise dem Förderband 2 minimiert. Dabei können die bei Schrägstellung der Spanneinrichtung 20 gegenüber der Fläche 2 zuerst auf die Fläche 2 auftreffenden Spannbügel 25 dadurch Positionierungsungenauigkeiten, die durch die Dynamik eines Roboters bedingt sind, ausgeglichen, da sie mittels der Blattfedern 24 (siehe Figur 1a) elastisch, das heißt nachgiebig, aufgehängt sind.

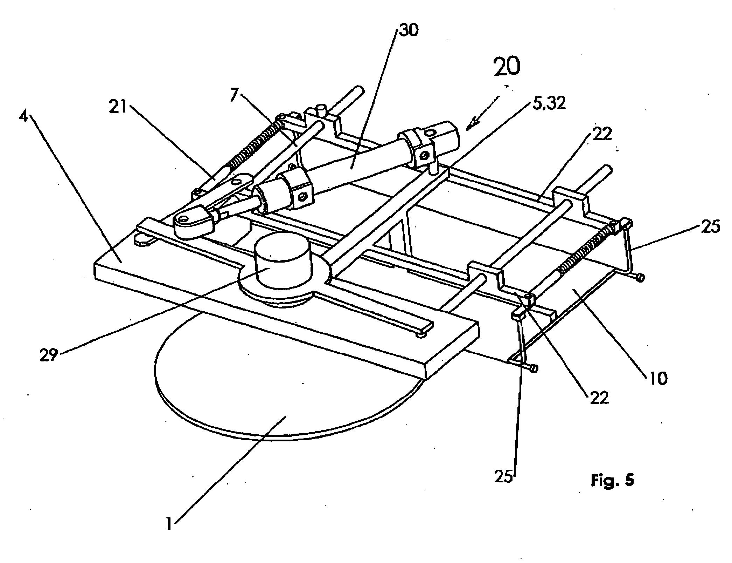

Figur 5 zeigt ein weiteres Ausführungsbeispiel, bei dem lediglich eine auf einer Seite des aufzunehmendes Gutes 1 Schiebevorrichtung 20 angeordnet ist. Ansonsten sind die Teile dieselben.

### Bezugezeichenliste

- 1: Gut
- 2: Förderband
- 3: kastenartige Rahmenstruktur
- 4: Platte
- 5: U-förmiger Bügel
- 6: Querstrebe
- 7: Führungsstangen
- 10: umlaufendes Band
- 12: Berührungsbereich
- 15: Feder
- 20: Schiebeeinrichtung
- 21: Spannstange
- 21': Absatz (Anschlag)
- 22: Querholm
- 23: Führungsöffnungen
- 24: Blattfeder
- 25: Spannbügel
- 26: Spannstrebe
- 26': Hülse
- 28: Schwenkhebel
- 29: Lager
- 30: Kolben-/Zylinderanordnung
- 31: Kniehebel
- 32: Ausleger

## Patentansprüche

1. Vorrichtung zur Aufnahme und zum Transport eines Gutes (1), die Aufnahmemittel aufweist, die durch eine Schiebeeinrichtung (20) unter das Gut (1) geschoben werden, wobei die Aufnahmemittel durch ein um Umlenkmittel geführtes Band gebildet werden, **dadurch gekennzeichnet, dass** die Umlenkmittel durch gegeneinander gespannte Spannstreben (26) gebildet werden, die an der Schiebeeinrichtung (20) angeordnet sind.

2. Vorrichtung nach Anspruch 1, **dadurch gekennzeichnet, dass** die Schiebeeinrichtung(20) gegenüber einer feststehenden Einheit(3) verschiebbar ist und bei der die Spannstreben (26) an der Schiebeeinrichtung (20)angeordnet sind, wobei die Schiebeeinrichtung gegenüber der Auflagefläche(2) des Gutes (1) schräggestellt ist.

3. Vorrichtung nach Anspruch 1 oder 2, **dadurch gekennzeichnet, dass** die Schiebeeinrichtung (20) zwei Spannstreben (26) aufweist, die durch Federn (15) auseinander gedrückt werden.

4. Vorrichtung nach einem der Ansprüche 1 bis 3, **dadurch gekennzeichnet, dass** die Spannstreben (26') an einer in Richtung der Fläche (2), auf der das Gut (1) aufliegt, elastische Aufhängung (24) angeordnet sind.

5. Vorrichtung nach Anspruch 4, **dadurch gekennzeichnet, dass** die elastische Aufhängung durch eine Blattfeder (24) gebildet wird.

6. Vorrichtung nach einem der Ansprüche 4 oder 5, **dadurch gekennzeichnet, dass** das Band (10) gegenüber der Fläche (2), auf der das Gut (1) aufliegt, schräg gestellt ist.

## Claims

1. Device for holding and transporting an item (1), which comprises holding means which are pushed by means of a sliding device (20) underneath the item (1), whereby the holding means are formed by a belt guided around guiding means, **characterised in that** the guiding means are formed by tensioning struts (26) tensioned against one another which are arranged on the sliding device (20).

2. Device according to claim 1, **characterised in that** the sliding device (20) can be displaced relative to a fixed unit (3), in which the tensioning struts (26) are arranged on the sliding device (20) and the sliding device is positioned obliquely relative to the bearing surface (2) of the item (1).

3. Device according to claim 1 or 2, **characterised in that** the sliding device (20) comprises two tensioning struts (26) which are pushed apart by springs (15).

4. Device according to one of claims 1 to 3, **characterised in that** the tensioning struts (26') are arranged on a suspension device (24) that is elastic In the direction of the surface (2) on which the item (1) lies.

5. Device according to claim 4, **characterised in that** the elastic suspension device is formed by a leaf spring (24).

6. Device according to one of claims 4 or 5, **characterised in that** the belt (10) is positioned obliquely relative to the surface (2) on which the item (1) lies.

## Revendications

1. Dispositif pour recevoir et transporter un objet (1), présentant des moyens de réception qui sont glissés sous l'objet (1) par le biais d'un dispositif coulissant (20), les moyens de réception étant formés par une bande guidée autour de moyens de renvoi,
**caractérisé en ce que** les moyens de renvoi sont formés par des tirants de tension (26) agencés sur le dispositif coulissant (20).

2. Dispositif selon la revendication 1,
**caractérisé en ce que** le dispositif coulissant (20) est mobile par rapport à une unité fixe (3) et dans lequel les tirants (26) sont agencés sur le dispositif coulissant (20), le dispositif coulissant étant disposé incliné par rapport à la surface de contact (2) de l'objet (1).

3. Dispositif selon l'une des revendication 1 ou 2,
**caractérisé en ce que** le dispositif coulissant (20) présente deux tirants (26) qui sont tirés par des ressorts (15).

4. Dispositif selon l'une des revendications 1 à 3,
**caractérisé en ce que** les tirants (26') sont agencés, dans la direction de la surface (2) sur laquelle est posé l'objet (1), sur une suspension élastique (24).

5. Dispositif selon la revendication 4,
**caractérisé en ce que** la suspension élastique est formée par un ressort à lames (24).

6. Dispositif selon l'une des revendications 4 ou 5,
**caractérisé en ce que** la bande (10) est positionnée Inclinée par rapport à la surface (2) sur laquelle est posée l'objet (1).
